# EUROPÄISCHE PATENTANMELDUNG

(11) **EP 1 050 746 A1**
(43) Veröffentlichungstag der Anmeldung: **08.11.2000**
(21) Anmeldenummer: 00102666.5
(22) Anmeldetag: 09.02.2000
(51) Int. Cl.: G01F 1/22

(54) **Durchflussmesser**

(30) Priorität: 07.05.1999 DE 19921608
(71) Anmelder: Kobold Messring GmbH, 65719 Hofheim am Taunus (DE)
(72) Erfinder: Balamoutoff, Philippe, 95046 Cergy-Pontoise Cedex (FR)
(74) Vertreter: KEIL & SCHAAFHAUSEN

(57) **Zusammenfassung**

Die Erfindung bezieht sich auf einen Durchflussmesser nach dem Schwebekörperprinzip, mit einem senkrechten, von unten nach oben von dem zu messenden Medium zu durchströmenden, zum Beispiel von einem Rohr gebildeten Strömungskanal, mit einem in dem Strömungskanal geführten Schwebekörper, welcher durch die Strömung angehoben wird und in ihr zum Beispiel aufgrund der Strömungsgeometrie in einer von der Strömungsgeschwindigkeit abhängigen Höhenlage schwebt, mit einem oberen und einem unteren mechanischen Anschlag für den Schwebekörper, sowie mit Mitteln zum Verhindern der nachteiligen Folgen von Strömungsinstabilitäten, wobei der Schwebekörper und der obere Anschlag bei ihrem Aufeinandertreffen zwischen sich ein Polster des zu messenden Mediums bilden.

## Beschreibung

Die Erfindung bezieht sich auf einen Durchflussmesser nach dem Schwebekörperprinzip. Der Durchflussmesser hat einen senkrechten, von unten nach oben von dem zu messenden flüssigen oder gasförmigen Medium zu durchströmenden, zum Beispiel von einem Rohr gebildeten Strömungskanal, einen in dem Strömungskanal geführten vorzugsweise rotationssymetrischen Schwebekörper, welcher durch die Strömung angehoben wird und in ihr zum Beispiel aufgrund der Strömungsgeometrie in einer von der Strömungsgeschwindigkeit abhängigen Höhenlage schwebt, einen oberen und einen unteren mechanischen Anschlag für den Schwebekörper, sowie Mittel zum Verhindern der nachteiligen Folgen von Strömungsinstabilitäten.

Es ist bekannt, dass in einer geschlossenen Rohrleitung bei plötzlicher Verzögerung der Strömung, zum Beispiel durch schnelle Drosselung oder Absperrung, Druckstöße auftreten, welche unter Umständen zur Zerstörung eines Durchflussmessers führen, da der Schwebekörper mit hoher Wucht gegen den oberen Anschlag geschleudert wird. Durch Turbulenzen, Pulsationen oder andere Instabilitäten der Strömung kann der Schwebekörper auch zu Schwingungen angeregt werden, deren Amplitude sich so aufschaukeln kann, dass der Schwebekörper gegen die mechanischen Anschläge in dem Messrohr schlägt. Schwingungen des Schwebekörpers können aber auch bei pulsationsfreier Strömung als spontane Kompressionsschwingungen auftreten, wenn die Volumina vor und hinter dem Schwebekörper einen kritischen Wert überschreiten. Zur Vermeidung von Schäden, welche durch derartige Druckstöße bzw. Schwingungen entstehen können, werden Dämpfungssysteme vorgeschlagen, welche die mechanischen Schwingungen des Schwebekörpers gegenüber den Druckschwingungen deutlich verzögern. Sie sollen auch das Anfachen von Instabilitäten des Schwebekörpers verhindern. Vorgeschlagen hierfür wurden beispielsweise Kolbendämpfungen, die als pneumatische Bremszylinder wirken.

Aufgabe der vorliegenden Erfindung ist es, einfache und wirksame Maßnahmen zu treffen, um die Beschädigung eines Schwebekörper-Durchflussmessers in Folge von Strömungsinstabilitäten zu verhindern.

Diese Aufgabe wird gemäß einem Grundgedanken der Erfindung dadurch gelöst, dass der Schwebekörper und der obere Anschlag bei ihrem Aufeinandertreffen zwischen sich ein Polster des zu messenden Mediums bilden. Durch das Polster, welches beim Aufeinandertreffen von Schwebekörper und oberen Anschlag nur allmählich aus dem immer kleiner werdenden Zwischenraum zwischen Schwebekörper und Anschlag entweichen kann, wird ein allmähliches Abbremsen des Schwebekörpers auch bei großer Wucht erreicht.

Es ist von Vorteil, wenn der obere Anschlag einen Zentrierkörper für den Schwebekörper bildet, so dass ein seitliches Anschlagen an das häufig aus Glas bestehende und den Strömungskanal bildende Rohr vermieden wird.

Der Zentrierkörper kann beispielsweise mit einem kegelstumpfförmigen Abschnitt in eine kegelförmige Vertiefung einer Aussparung des Schwebekörpers eingreifen. Bis die einander zugeordneten Berührungsflächen des kegelstumpfförmigen Abschnitts und der kegelförmigen Vertiefung im Berührung kommen, kann das zu messende Medium allmählich aus der Aussparung des Schwebekörpers entweichen. Unterhalb des kegelstumpfförmigen Abschnitts verbleibt eine Restkammer. Ein Aufschwingen des Schwebekörpers wird dadurch vermieden.

In einer weiteren Ausgestaltung der Erfindung ist der kegelstumpfförmige Abschnitt am unteren Ende eines Zylinderabschnitts des Zentrierkörpers vorgesehen. Der Zylinderabschnitt bildet vorzugsweise einen Ringspalt mit einem sich nach oben an die kegelförmige Vertiefung der Aussparung anschließenden zylinderförmigen Abschnitt der Aussparung des Schwebekörpers. Sind die Berührungsflächen von oberem Anschlag und Zentrierkörper aufeinandergetroffen, ist das letzte freie Volumen an der Spitze des Zentrierkörpers eingeschlossen, während das übrige zu messende Medium aus der Aussparung des Schwebekörpers durch den schmalen Ringspalt zu dem Zentrierkörper entwichen ist.

Der Zentrierkörper kann jedenfalls im Bereich der kegelstumpfförmigen Berührungsflächen mit dem Schwebekörper aus einem Kunststoff wie PFTE, und der Schwebekörper jedenfalls im Bereich der kegelstumpfförmigen Berührungsflächen mit dem Zentrierkörper aus Metall, wie Aluminium, bestehen.

Zur weiteren Verbesserung der angestrebten Aufgabenlösung dient es, wenn sich der Zentrierkörper in Strömungsrichtung an einer oberen Dämpfungsfeder abstützt. Die Dämpfungsfeder kann für die Aufnahme eines oberen verjüngten Abschnitts des Zentrierkörpers als schraubenlinienförmige Feder ausgebildet sein.

Zur Dämpfung kann ferner auch der weniger kritische untere Anschlag einen unteren Zentrierkörper für den Schwebekörper aufweisen, so dass ein seitliches Ausschlagen des Schwebekörpers vermieden wird.

Der untere Zentrierkörper hat dabei vorzugsweise eine kegelförmige Aussparung, in welche der Schwebekörper mit einem dazu passenden kegelförmigen Vorsprung eingreift.

Schließlich kann sich auch der untere Zentrierkörper ebenfalls auf einer unteren Dämpfungsfeder ab.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale den Gegenstand der vorliegenden Erfindung, auch unabhängig von ihrer Zusammenfassung in den Ansprüchen oder deren Rückbeziehung.

Es zeigen:

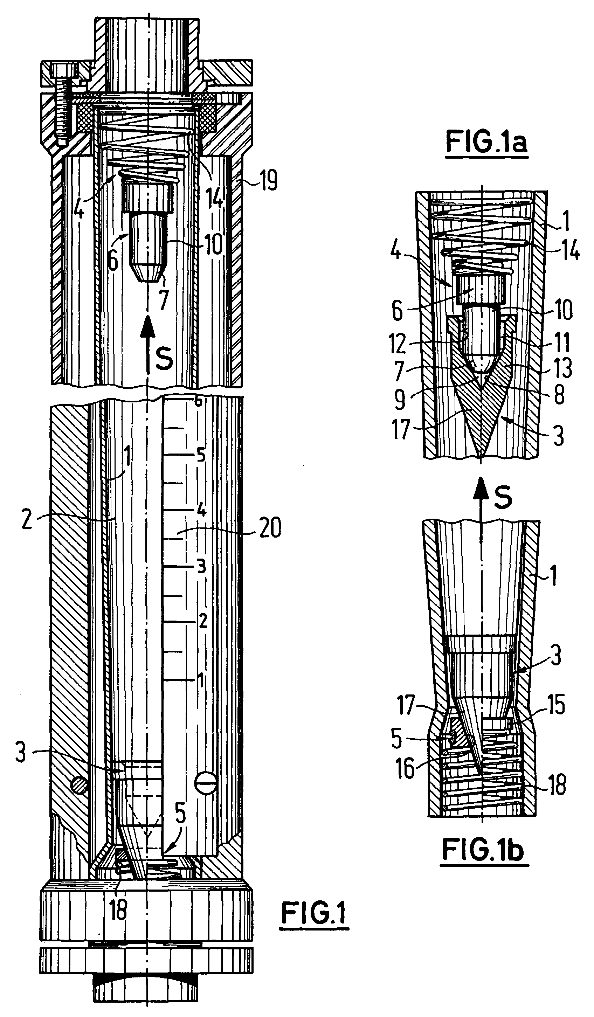

- Fig. 1: teilweise geschnitten und verkürzt einen die Erfindung aufweisenden Schwebekörper-Durchflussmesser, und
- Fig. 1a und 1b: Detailvergrößerungen des oberen und des unteren Bereichs des Schwebekörper-Durchflussmessers gemäß Fig. 1, im Schnitt.

Der in Fig. 1 dargestellte Durchflussmesser hat ein in einem Gehäuse 19 eingespanntes Rohr 1 aus Glas, welches einen Strömungskanal 2 bildet und auf seiner Außenseite eine Messskala 20 für die Höhenlage eines Schwebekörpers 3 trägt, wie er in Fig. 1a im Schnitt und in Fig. 1b in Ansicht zu sehen ist. In dem Strömungskanal 2, durch welchen im Betrieb das zu messende Medium von unten nach oben, also in Axialrichtung S strömt, wird der rotationssymetrische Schwebekörper 3 geführt. Der Schwebekörper 3 hat eine obere Aussparung 9, welche von einer unteren kegelförmigen Vertiefung 8 und einem sich nach oben an diesen anschließenden zylinderförmigen Abschnitt 12 gebildet ist.

Ein oberer mechanischer Anschlag 6 ist von einem Zentrierkörper 6 für den Schwebekörper 3 und einer Dämpfungsfeder 14 gebildet, auf welcher sich der Zentrierkörper 6 in Strömungsrichtung S, also nach oben, abstützt. Zur besseren Halterung greift der Zentrierkörper 6 mit einem oberen verjüngten Abschnitt in die schraubenlinienförmig ausgebildete Dämpfungsfeder 14 ein. Der Zentrierkörper 6 hat einen mittleren zylinderförmigen Abschnitt 10, dessen Durchmesser geringfügig kleiner ist als der zylinderförmige Abschnitt 12 der Aussparung 9 des Schwebekörpers 3, so dass ein geringer und in Abhängigkeit des zu messenden Meidums wählbarer Ringspalt 11 geringer Breite freigehalten bleibt. An dem zylinderförmigen Abschnitt 10 schließt sich nach unten ein kegelstumpfförmiger Abschnitt an. Die Steigungen des kegelstumpfförmigen Abschnitts 7 und der kegelförmigen Vertiefung 8 sind gleich, so dass der Zentrierkörper 6 und der Schwebekörper 3 beim oberen Anschlag über die kegelstumpfförmigen Berührungsflächen 13 vollflächig aneinander anliegen, nachdem das zu messende Medium allmählich aus der Aussparung 9 des Schwebekörpers 3 verdrängt wurde.

Auch der untere Anschlag 5 für den Schwebekörper 3 hat einen unteren Zentrierkörper 15 mit einer kegelförmigen Aussparung 16, in welche der Schwebekörper 3 mit einem kegelförmigen Vorsprung 17 eingreifen kann. Auch der untere Anschlag 5 stützt sich zur Dämpfung auf eine untere Dämpfungsfeder 18, d.h. gegen die Strömungsrichtung S, ab.

Durch die besondere Ausgestaltung der Geometrie des Zentrierkörpers 6 und der Aussparung 9 des Schwebekörpers 3 am oberen Anschlag 4 wird ein allmähliches Herauspressen des zu messenden Mediums aus der Aussparung 9 über den schmalen Ringspalt 11 sichergestellt und die Gefahr von Beschädigungen des Durchflussmessers verhindert. Hierzu trägt auch die Maßnahme bei, ein seitliches Ausweichen des Schwebekörpers 3 und Beschädigen des häufig aus Glas bestehenden Rohres 1 zu vermeiden.

Der Zentrierkörper 6 besteht jedenfalls im Bereich der kegelstumpfförmigen Berührungsflächen 13 mit dem Schwebekörper 3 aus einem Kunststoff, wie PTFE, und der Schwebekörper 3 jedenfalls im Bereich der kegelstumpfförmigen Berührungsfläche mit dem Zentrierkörper aus Metall, wie Aluminium.

### Bezugszeichenliste:

- 1: Rohr
- 2: Strömungskanal
- 3: Schwebekörper
- 4: oberer Anschlag
- 5: unterer Anschlag
- 6: Zentrierkörper
- 7: kegelstumpfförmiger Abschnitt
- 8: kegelförmige Vertiefung
- 9: Aussparung
- 10: Zylinderabschnitt
- 11: Ringspalt
- 12: zylinderförmiger Abschnitt
- 13: Berührungsfläche
- 14: obere Dämpfungsfeder
- 15: unterer Zentrierkörper
- 16: kegelförmige Aussparung
- 17: kegelförmiger Vorsprung
- 18: untere Dämpfungsfeder
- 19: Gehäuse
- 20: Messskala
- S: Strömungsrichtung

## Patentansprüche

1. Durchflussmesser nach dem Schwebekörperprinzip, mit einem senkrechten, von unten nach oben von dem zu messenden Medium zu durchströmenden, zum Beispiel von einem Rohr (1) gebildeten Strömungskanal (2), mit einem in dem Strömungskanal (2) geführten Schwebekörper (3), welcher durch die Strömung angehoben wird und in ihr zum Beispiel aufgrund der Strömungsgeometrie in einer von der Strömungsgeschwindigkeit abhängigen Höhenlage schwebt, mit einem oberen (4) und einem unteren (5) mechanischen Anschlag für den Schwebekörper (3), sowie mit Mitteln zum Verhindern der nachteiligen Folgen von Strömungsinstabilitäten, **dadurch gekennzeichnet,** dass der Schwebekörper (3) und der obere Anschlag (4) bei ihrem Aufeinandertreffen zwischen sich ein Polster des zu messenden Mediums bilden.

2. Durchflussmesser nach Anspruch 1, **dadurch gekennzeichnet,** dass der obere Anschlag (4) einen Zentrierkörper (6) für den Schwebekörper (3) bildet.

3. Durchflussmesser nach Anspruch 2, **dadurch gekennzeichnet,** dass der Zentrierkörper (6) mit einem kegelstumpfförmigen Abschnitt (7) in eine kegelförmige Vertiefung (8) einer Aussparung (9) des Schwebekörpers (3) eingreift.

4. Durchflussmesser nach einem der vorhergehenden Ansprüche, **dadurch gekennzeichnet,** dass der kegelstumpfförmige Abschnitt (7) an dem unteren Ende eines Zylinderabschnitts (10) des zentrierkörpers (6) vorgesehen ist, wobei der Zylinderabschnitt (10) einen Ringspalt (11) mit einem sich nach oben an die kegelförmige Vertiefung (8) der Aussparung (9) anschließenden zylinderförmigen Abschnitt (12) der Aussparung (9) des Schwebekörpers (3) bildet.

5. Durchflussmesser nach einem der vorhergehenden Ansprüche, **dadurch gekennzeichnet,** dass der Zentrierkörper (6) jedenfalls im Bereich der kegelstumpfförmigen Berührungsflächen (13) mit dem Schwebekörper (3) aus einem Kunststoff, wie PTFE, und der Schwebekörper (3) jedenfalls im Bereich der kegelstumpfförmigen Berührungsflächen (13) mit dem Zentrierkörper (6) aus Metall, wie Aluminium, besteht.

6. Durchflussmesser nach einem der vorhergehenden Ansprüche, **dadurch gekennzeichnet,** dass sich der Zentrierkörper (6) in Strömungsrichtung (S) an einer oberen Dämpfungsfeder (14) abstützt.

7. Durchflussmesser nach Anspruch 6, **dadurch gekennzeichnet,** dass die Dämpfungsfeder (14) eine schraubenlinienförmige Feder ist.

8. Durchflussmesser nach einem der vorhergehenden Ansprüche, **dadurch gekennzeichnet,** dass der untere Anschlag (5) einen unteren Zentrierkörper (15) für den Schwebekörper (3) aufweist.

9. Durchflussmesser nach Anspruch 8, **dadurch gekennzeichnet,** dass der untere Zentrierkörper (15) eine kegelförmige Aussparung (16) aufweist, in welche der Schwebekörper (3) mit einem dazu passenden kegelförmigen Vorsprung (17) eingreift.

10. Durchflussmesser nach Anspruch 8 oder 9, **dadurch gekennzeichnet,** dass sich der untere Zentrierkörper (15) entgegen der Strömungsrichtung auf einer unteren ggf. als schraubenlinienförmige Feder ausgebildete Dämpfungsfeder (18) abstützt.
